# EUROPÄISCHE PATENTSCHRIFT

(11) **EP 3 919 449 B1**
(45) Veröffentlichungstag und Bekanntmachung des Hinweises auf die Patenterteilung: **11.12.2024**
(21) Anmeldenummer: 21176080.6
(22) Anmeldetag: 26.05.2021
(51) Int. Cl.: C03B 23/045, C03B 33/06, C03B 33/095

(54) **VERFAHREN SOWIE ANLAGE ZUM HERSTELLEN EINES GLASBEHÄLTNISSES UND LUFTLAGER**
METHOD AND INSTALLATION FOR MANUFACTURING A GLASS CONTAINER AND AIR BEARING
PROCÉDÉ, AINSI QU'INSTALLATION DE FABRICATION D'UN RÉCIPIENT EN VERRE ET PALIER À AIR

(30) Priorität: 04.06.2020 DE 102020114883
(43) Veröffentlichungstag der Anmeldung: 08.12.2021
(73) Patentinhaber: Gerresheimer Bünde GmbH, 32257 Bünde (DE); Gerresheimer Regensburg GmbH, 93047 Regensburg (DE)
(72) Erfinder: Acker, Wolfram, 32257 Bünde (DE); Kiener, Richard Martin, 92526 Oberviechtach (DE); Löpp, Vladislav, 32257 Bünde (DE)
(74) Vertreter: Schmid, Nils T.F.

(56) Entgegenhaltungen:
- EP-A2- 0 187 230
- DE-A1- 3 125 521
- GB-A- 1 025 500
- US-A1- 2017 283 299

## Beschreibung

Die vorliegende Erfindung betrifft ein Verfahren und eine Anlage zum Herstellen eines Glasbehältnisses, wie einer Glasspritze oder einer Glasampulle, aus einem Glasrohrrohling und ein Luftlager für eine derartige Anlage.

Glaskörper für Glasspritzen oder Glasampullen unterliegen sehr geringen Fertigungstoleranzen, damit zum einen eine hohe Produktqualität sichergestellt werden kann und zum anderen die teilweise genormten Schnittstellen beispielsweise im trichterförmigen Endabschnitt eingehalten werden können. Ein weiterer, die Qualität beziehungsweise Genauigkeit des Glasbehältnisses beeinträchtigender Faktor ist durch die fertigungsspezifischen Toleranzen beim Ablängen von Glasbehältnisrohlingen von dem Glasrohrrohling gegeben. Bei der Herstellung von rotationssymmetrischen Glasröhren werden im Stand der Technik zum Abtrennen der (Endlos)-Glasröhren auf eine bestimmte Länge die Glasröhren an einer vordefinierten Position entlang der Längsachse der Glasröhre geritzt, erhitzt, schockgekühlt und nacherhitzt. Während der Bearbeitung wird die Glasröhre um ihre Längsachse rotiert und nach einem Trennvorgang in Richtung der Längsachse verlagert, sodass ein nachgeschalteter Trennvorgang durchgeführt werden kann.

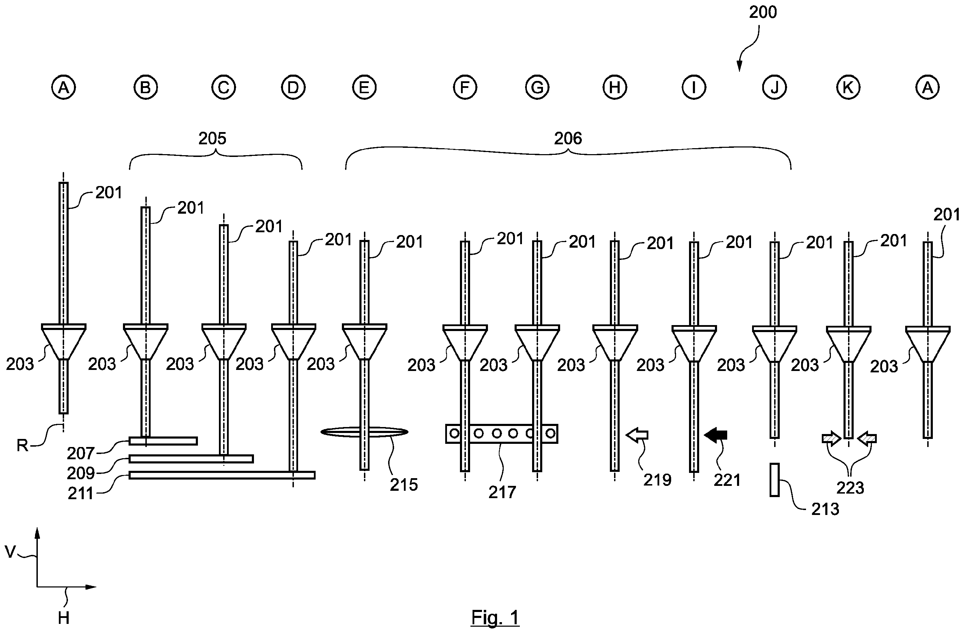

Die Lagerung erfolgte bislang in einem Futter, das nur eine Rotation der Glasröhre um dessen Längsachse zulässt. Die Lagerung ist so angeordnet, dass die Glasröhrenlängsachse vertikal orientiert ist. Zum vertikalen Positionieren der Glasröhren sind Anschlagbleche unterhalb des Futters vorgesehen. Dazu muss das Futter geöffnet werden, sodass die von dem Futter gehaltene Glasröhre freigegeben wird und aufgrund von Schwerkraft bei geöffnetem Futter nach vertikal unten auf die Anschlagbleche fällt. Für den nachgeschalteten translatorischen Auswurf des abgetrennten Glasbehältnisses entlang dessen Längsachse und zum Vorbereiten der Glasröhre für einen weiteren Abtrennvorgang muss das Futter erneut geöffnet werden, um die Glasröhre freizugeben und zu bewegen, wodurch das abgetrennte Glasbehältnis unter dem Einfluss der Schwerkraft in eine weitere Bearbeitungsstation fallen konnte und die Glasröhre unter dem Einfluss der Schwerkraft wiederum gegen die Anschlagbleche fallengelassen wurde. Eine schematische Darstellung eines Stand der Technik-Röhrenschneiders ist als Fig. 1 den vorliegenden Anmeldungsunterlagen beigefügt.

DE3125521 A1 lehrt eine Anlage zur Herstellung eines Glasrohrs, welches für Glasbehältnisse nutzbar ist. Dabei wird das Rohr auf einem Luftlager gelagert und dann abgetrennt.

GB 1025500 A lehrt das Schneiden eines heissen Glasrohrs, welches von einem Luftlager gestützt wird.

US2017283299 A1 offenbart das Schneiden abgekühlter Glasrohlinge, die mittels einer Spindel im Innern des Rohlings rotiert werden, wobei die Spindel von einem Luftlager gehalten wird.

Der Herstellungsprozess hat sich grundsätzlich bewährt. Allerdings haben die Erfinder der vorliegenden Erfindung herausgefunden, dass es zu Beschädigungen der Glasbehältnisse insbesondere beim Fallenlassen der Glasröhren auf die Anschlagbleche kommen kann. Ein weiterer Nachteil des bisherigen Verfahrens besteht darin, dass die Lagerung Verschleiß und Verschmutzung ausgesetzt ist. Des Weiteren besteht nur eine begrenzte Handhabungsmöglichkeit der Glasröhren, da diese nur entlang deren Längsachse in das Futter eingesetzt werden können. Ferner ist eine erhebliche Spannlänge des Futters nötig, um die Glasröhre in vertikaler Ausrichtung genügend stabil halten zu können, um einen zufriedenstellenden Abschnitt der Glasröhre zu ermöglichen.

Es ist Aufgabe der vorliegenden Erfindung, die Nachteile des Standes der Technik zu überwinden, insbesondere eine Glasbehältnisherstellungsanlage zu verbessern und/oder ein konstruktiv einfach umzusetzendes und weniger verschleiß- sowie verschmutzungsanfälliges Lager für eine Glasröhrenbearbeitungsstation bereitzustellen, bei der eine Beschädigung der Glasröhre vermieden ist und/oder die flexibler in der Handhabung ist.

Diese Aufgabe wird durch die Merkmale der unabhängigen Ansprüche gelöst.

Danach ist eine Anlage zum Herstellen eines insbesondere rotationssymmetrischen Glasbehältnisses, wie einer Glasspritze, einer Glaskarpule, eines Glasvials oder einer Glasampulle, bereitgestellt. Die Glasbehältnisherstellungsanlage erzeugt aus einem insbesondere rotationssymmetrischen Glasrohrrohling, welcher eine Rotationsachse definiert, das insbesondere rotationssymmetrische Glasbehältnis. Die Glasbehältnisherstellungsanlage kann beispielsweise fortwährend mit Glasrohrrohlingen bestückt werden, die beispielsweise in einem Vorratslager bevorratet sind, das beispielsweise in unmittelbarer Nähe zu der Glasbehältnisherstellungsanlage sich befinden kann. Des Weiteren kann die Glasbehältnisherstellungsanlage so eingerichtet sein, dass sie unmittelbar von einer Glasblasstation bestückt wird, insbesondere mit einem Endlos-Glasrohrrohling.

Die erfindungsgemäße Anlage umfasst ein Futter zum rotierenden Lagern des Glasrohrrohlings. Für den Fall, dass es sich um einen rotationssymmetrischen Glasrohrrohling handelt, entspricht die Rotationsachse der Mittelachse des Glasrohrrohlings. Das Futter, auch Spannfutter genannt, ist dazu eingerichtet, den Glasrohrrohling wenigstens umfangsabschnittsweise zu umgreifen und festzuhalten. Beispielsweise kann das Spannfutter mit einer Antriebseinrichtung, wie einem Motor, gekoppelt sein, der die Rotation des Futters und damit des Glasrohrrohlings veranlasst. Beispielsweise kann es sich bei dem Futter um ein Drei-Backen-Spannfutter handeln. Das Spannfutter kann auch dazu dienen, den Glasrohrrohling entlang dessen Längsachse in seiner Position zu fixieren, so dass Bearbeitungsvorgänge, insbesondere Formgebungen, wie eine Deformation oder ein Abtrennvorgang, vorgenommen werden können.

Des Weiteren umfasst die Anlage eine Ablängeinrichtung zum Ablängen von Glasbehältnissen vorbestimmter Länge von dem Glasrohrrohling. Mittels der Anlage können automatisch Glasbehältnisse von dem Glasrohrrohling abgelängt werden entsprechend einer vordefinierten, gewünschten Länge in Glasrohrrohlinglängsrichtung betrachtet. Unter bestimmte Länge kann auch verstanden werden, dass vor jedem individuellen Abtrennvorgang jedes individuellen Glasbehältnisses eine Individuallänge eingestellt wird, beispielsweise manuell eingegeben wird oder aus einem zentral hinterlegten Steuerungsprogramm abgefragt wird. Die Ablängeinrichtung kann mehrere Teilschritte durchführen bzw. mehrere Teilstationen aufweisen. Beispielsweise erfolgt der Ablängvorgang im Wesentlichen kontaktlos, beispielsweise durch Wärmeeintrag und die dadurch hervorgerufene Materialspannung innerhalb des Glasrohrrohlings, welche zu einem Abtrennen, insbesondere einer Absprengung, des Glasbehältnisses von dem Glasrohrrohling führt. Beispielsweise kann das Ablängen die folgenden Schritte umfassen bzw. die Ablängeinrichtung die folgenden Stationen umfassen: Anritzen des Glasrohrrohlings; lokales Erwärmen des Glasrohrrohlings insbesondere im Bereich der Anritzstelle, beispielsweise durch einen Brenner oder einen CO₂-Laser; anschließendes lokales Abkühlen, insbesondere durch Aufbringen eines Kühlfluidstroms, insbesondere eines Kühl-Luftstroms oder eines Kühlflüssigkeitsstroms, des angeritzten und lokal erhitzten Bereichs des Glasrohrrohlings; und erneutes lokales Erwärmen des mit dem Kühlfluidstrom beaufschlagten Glasrohrrohrlingbereichs zur Initiierung der Abtrennung des Glasbehältnisses, beispielsweise durch eine sogenannte Thermoshock-Absprengung; gegebenenfalls Verschmelzen der Abtrennstelle, um den Glasrohrrohling endseitig zu verschließen.

Erfindungsgemäß umfasst die Anlage ein dem Futter nachgeschaltetes und der Ablängeinrichtung vorgeschaltetes Luftlager zum kontaktlosen Lagern des Glasrohrrohlings. Das Luftlager kann gemäß einem der folgenden erfindungsgemäßen Aspekte bzw. beispielhaften Ausführungen ausgebildet sein. Die Ausdrücke vorgeschaltet und nachgeschaltet sind in Bezug auf eine Glasrohrrohlinglängsachse zu verstehen. Mittels des Luftlagers kann der Glasrohrrohling in Umfangsrichtung wenigstens teilweise kontaktlos umgriffen werden, um eine kontaktlose Halte-und/oder Lagerkraft dem Glasrohrrohling mitzuteilen. Glasseitig gewährleistet das Luftlager die kontinuierliche Rotation des Glasrohrrohlings um dessen Rotationsachse. Im Allgemeinen wird bei dem Luftlager ein insbesondere dünner Luftfilm zwischen Glasrohrrohling und Luftlager ausgebildet, der den Glasrohrrohling und das Luftlager voneinander trennt, insbesondere die kontaktlose Lagerung bewirkt. Luftlager kennzeichnen sich bekanntermaßen durch stick-slip-freie und reibungsfreie Lagerungseigenschaften. Überraschenderweise hat sich das Luftlager als vorteilhaft und geeignet auch für die Anwendung in Glasbehältnisherstellungsanlagen erwiesen, da der in dem Luftlager auftretende Luftstrom zum Ermöglichen der kontaktlosen Lagerung des Glasrohrrohlings auch eine Reinigungswirkung, insbesondere einen Selbstreinigungseffekt, besitzt. Glas- und/oder Schmutzpartikel, die an dem Glasrohrrohling haften, werden durch den Luftstrom entfernt, so dass die Oberfläche des Glasrohrrohlings im Wesentlichen frei von Partikeln und/oder Verschmutzungen ist. Im Allgemeinen macht sich das Luftlager den Bernoulli-Effekt zunutze und ermöglicht einen Bewegungsfreiheitsgrad des Glasrohrrohlings sowohl drehend in Rotationsrichtung als auch translatorisch verschiebbar entlang dessen Glasrohrlängsrichtung. Das Luftlager kann dazu ausgebildet sein, sämtliche relevanten Kräfte, insbesondere die Gewichtskraft des Glasrohrrohlings sowie Prozesskräfte beispielsweise aufgrund der Rotation des Glasrohrrohlings aufzunehmen, ohne den Glasrohrrohling zu kontaktieren.

Gemäß einer beispielhaften Ausführung der erfindungsgemäßen Anlage weist das Luftlager eine sich entlang der Rotationsachse des Glasrohrrohlings, die insbesondere der Glasrohrrohlinglängsachse entspricht, erstreckende Aufnahme für den Glasrohrrohling auf. Die Aufnahme kann diejenige Komponente des Luftlagers bilden, welche dem Glasrohrrohling unmittelbar zugewandt ist und die für das kontaktlose Lagern und Halten des Glasrohrrohlings verantwortlich ist. Die Aufnahme kann wenigstens abschnittsweise an einem Außenumfang des insbesondere rotationssymmetrischen Glasrohrrohlings formangepasst sein. Beispielsweise kann gewährleistet sein, dass ein aufgrund der kontaktfreien Lagerung des Glasrohrrohlings bestehender Abstand zwischen Glasrohrrohling und Aufnahme im Wesentlichen konstant ist. Alternativ oder zusätzlich kann die Aufnahme im Querschnitt teilweise offen sein, so dass der Glasrohrrohling in einer Richtung quer zur Rotationsachse in die Aufnahme eingelegt werden kann. Bei Stand der Technik-Anlagen war bislang ein Einsetzen der Glasrohrrohlinge in das Spannfutter und die dafür vorgesehenen Lagerungen nur entlang der Rotations- bzw. Glasrohrrohlinglängsachse möglich. Die erfindungsgemäße Anlage ist nun deutlich flexibler in der Handhabung und Orientierung.

Gemäß einer beispielhaften Weiterbildung der erfindungsgemäßen Anlage ist die Aufnahme im Wesentlichen teilzylindrisch geformt. Insbesondere bildet die Aufnahme einen teilzylindrischen Aufnahmebereich, in dem der rotationssymmetrische Glasrohrrohling eingesetzt und in dem dieser teilweise aufgenommen ist. Gemäß einer beispielhaften Ausführung ist die Aufnahme abschnittsweise konkav gebildet, insbesondere zur Bildung der teilzylindrischen Form. Alternativ oder zusätzlich kann die Aufnahme abschnittsweise konvex geformt sein. Dabei kann ein konkaver Abschnitt der Aufnahme einen Aufnahmegrund bilden und/oder ein konvexer Abschnitt wenigstens abschnittsweise eine Aufnahmeseitenflanke. Der Aufnahmegrund kann in zwei Aufnahmeseitenflanken münden. Insbesondere besitzt die Aufnahme einen insbesondere konkaven Aufnahmegrund und zwei gegenüberliegende Aufnahmeseitenflanken. Ferner können die Aufnahmeseitenflanken abschnittsweise konkav gebildet sein, wobei insbesondere der konkave Bereich der Aufnahmeseitenflanken unmittelbar angrenzend an den Aufnahmegrund angeordnet ist. Gemäß einer weiteren beispielhaften Ausführung ist die Aufnahme mehrteilig ausgebildet. Dabei können die Aufnahmeseitenflanken aus einem Teil hergestellt sein und der Aufnahmegrund aus wenigstens einem weiteren Teil hergestellt sein.

In einer weiteren beispielhaften Ausführung der vorliegenden Erfindung ist das Luftlager an einer axialen Position der Anlage im Bereich von 1/3 bis 2/3 eines Axialabstands zwischen der Ablängeinrichtung und dem Futter angeordnet. Die axiale Position bzw. die Axialrichtung ist dabei in Bezug auf die Rotationsachsenrichtung und/oder die Glasrohrrohling die Längsachsenrichtung zu verstehen. Alternativ kann die Anlage wenigstens ein weiteres Luftlager zum kontaktlosen Lagern des Glasrohrrohlings besitzen. Dabei kann sich ein futterseitiges Luftlager an einer axialen Position im Bereich von ¼ bis ½ eines Axialabstands zwischen der Ablängeinrichtung und dem Futter befinden. Ein ablängeinrichtungseitiges Luftlager kann sich an einer axialen Position von mindestens ¾ eines Axialabstands zwischen der Ablängeinrichtung und dem Futter befinden. Gemäß einer beispielhaften Weiterbildung befindet sich das ablängeinrichtungseitige Luftlager in unmittelbarer Nähe zu der Ablängeinrichtung. Durch die beschriebenen Anordnungen des wenigstens einen Luftlagers ist eine stabile Lagerung für den Glasrohrrohling bereitgestellt, um den befolgenden Ablängvorgang zuverlässig durchführen zu können.

Gemäß einem weiteren Aspekt der vorliegenden Erfindung, der mit den vorhergehenden Aspekten und beispielhaften Ausführungen kombinierbar ist, ist eine Anlage zum Herstellen eines insbesondere rotationssymmetrischen Glasbehältnisses, wie einer Glasspritze, einer Glaskarpule, eines Glasvials oder einer Glasampulle, aus einem insbesondere rotationssymmetrischen Glasrohrrohling, der eine Rotationsachse definiert, bereitgestellt.

Die Anlage umfasst eine Ablängeinrichtung zum Ablängen von Glasbehältnissen vorbestimmter Länge von dem Glasrohrrohling. Mittels der Anlage können automatisch Glasbehältnisse von dem Glasrohrrohling abgelängt werden entsprechend einer vordefinierten, gewünschten Länge in Glasrohrrohlinglängsrichtung betrachtet. Unter bestimmte Länge kann auch verstanden werden, dass vor jedem individuellen Abtrennvorgang jedes individuellen Glasbehältnisses eine Individuallänge eingestellt wird, beispielsweise manuell eingegeben wird oder aus einem zentral hinterlegten Steuerungsprogramm abgefragt wird. Die Ablängeinrichtung kann mehrere Teilschritte durchführen bzw. mehrere Teilstationen aufweisen. Beispielsweise erfolgt der Ablängvorgang im Wesentlichen kontaktlos, beispielsweise durch Wärmeeintrag und die dadurch hervorgerufene Materialspannung innerhalb des Glasrohrrohlings, welche zu einem Abtrennen, insbesondere einer Absprengung, des Glasbehältnisses von dem Glasrohrrohling führt. Beispielsweise kann das Ablängen die folgenden Schritte umfassen bzw. die Ablängeinrichtung die folgenden Stationen umfassen: Anritzen des Glasrohrrohlings; lokales Erwärmen des Glasrohrrohlings insbesondere im Bereich der Anritzstelle, beispielsweise durch einen Brenner oder einen CO₂-Laser; anschließendes lokales Abkühlen, insbesondere durch Aufbringen eines Kühlfluidstroms, insbesondere eines Kühl-Luftstroms oder eines Kühlflüssigkeitsstroms, des angeritzten und lokal erhitzten Bereichs des Glasrohrrohlings; und erneutes lokales Erwärmen des mit dem Kühlfluidstrom beaufschlagten Glasrohrrohrlingbereichs zur Initiierung der Abtrennung des Glasbehältnisses, beispielsweise durch eine sogenannte Thermoshock-Absprengung; gegebenenfalls Verschmelzen der Abtrennstelle, um den Glasrohrrohling endseitig zu verschließen.

Erfindungsgemäß umfasst die Anlage ein der Ablängeinrichtung vorgeschaltetes Futter zum rotierenden Lagern des Glasrohrrohlings. Der Ausdruck vorgeschaltet ist in Bezug auf die Glasrohrrohling die Rotationsachsenrichtung bzw. dessen Glasrohrrohlinglängsachse zu verstehen. Für den Fall, dass es sich um einen rotationssymmetrischen Glasrohrrohling handelt, entspricht die Rotationsachse der Mittelachse des Glasrohrrohlings. Das Futter, auch Spannfutter genannt, ist dazu eingerichtet, den Glasrohrrohling wenigstens umfangsabschnittsweise zu umgreifen und festzuhalten. Beispielsweise kann das Spannfutter mit einer Antriebseinrichtung, wie einem Motor, gekoppelt sein, der die Rotation des Futters und damit des Glasrohrrohlings veranlasst. Beispielsweise kann es sich bei dem Futter um ein Drei-Backen-Spannfutter handeln. Das Spannfutter kann auch dazu dienen, den Glasrohrrohling entlang dessen Längsachse in seiner Position zu fixieren, so dass Bearbeitungsvorgänge, insbesondere Formgebungen, wie eine Deformation oder ein Abtrennvorgang, vorgenommen werden können.

Gemäß dem weiteren Aspekt der vorliegenden Erfindung weist das Futter eine Vorschubeinrichtung zum insbesondere horizontalen Verlagern des Glasrohrrohlings auf. Beispielsweise ist die Vorschubeinrichtung dazu ausgebildet, den Glasrohrrohling im Wesentlichen ausschließlich translatorisch zu verlagern. Die Vorschubeinrichtung kann eine bezüglich einer Antriebseinrichtung zum Rotieren des Glasrohrrohlings mittels des Futters separate Komponente sein. Ein Vorteil der dem Futter zugeordneten Vorschubeinrichtung ist, dass das den Glasrohrrohling festhaltende und rotierende Futter nicht mehr geöffnet werden muss, um den Glasrohrrohling insbesondere horizontal und/oder translatorisch zu verlagern. Das Futter besitzt demnach einen Rotations- und einen Translationsfreiheitsgrad. Dadurch kann Zeit während der Herstellung von Glasbehältnissen eingespart werden und die Taktzeit zur Herstellung der Glasbehältnisse erhöht werden. Auf den im Stand der Technik notwendigen Schritt des Öffnens des Spannfutters vor dem translatorischen Weiterbefördern des Glasrohrrohlings kann nun verzichtet werden. Ein Glasrohrrohling, aus dem in der Regel mehrere Glasbehältnisse hergestellt werden können, kann nun, ohne dass das Futter geöffnet wird, mehrfach abgelängt werden. Dabei ist es nicht notwendig, die Ablängeinrichtung zu bewegen. Mittels der Vorschubeinrichtung kann das Glasrohrrohling nach einem Abtrennvorgangs eines ersten Glasbehältnisses weiterbewegt werden, um den Glasrohrrohling erneut in Bezug auf die Ablängeinrichtung in eine Ablängposition zu bringen. Insbesondere kann der Glasrohrrohling wenigstens derart weit insbesondere horizontal und/oder translatorisch verlagert werden, dass nach einem ersten Abtrennvorgang wenigstens ein weiterer Abtrennvorgang zum Herstellen eines weiteren Glasbehältnisses der vorbestimmten Länge, also Axiallänge, hergestellt werden kann.

Gemäß einer beispielhaften Weiterbildung der erfindungsgemäßen Anlage ist die Vorschubeinrichtung derart eingerichtet, dass sie den Glasrohrrohling inklusive des Futters insbesondere horizontal und/oder translatorisch verlagern kann. Somit kann die rotierende Lagerung des Glasrohrrohlings innerhalb des Futters aufrechterhalten werden, während der Glasrohrrohling insbesondere in Richtung der Ablängeinrichtung verlagert wird.

Gemäß einer weiteren beispielhaften Ausführung der erfindungsgemäßen Anlage ist das Futter relativ zu einem ortsfesten Gehäuse der Anlage insbesondere translatorisch und/oder horizontal verlagerbar. Beispielsweise ist das Gehäuse oder auch Gestell auf einem Untergrund abgestellt, beispielsweise einem Fabrikboden.

Gemäß einer beispielhaften Weiterbildung der erfindungsgemäßen Anlage ist das Futter mittels einer Linearführung, beispielsweise einer Schienenführung, insbesondere translatorisch und/oder horizontal verlagerbar an einem ortsfesten Gehäuse der Anlage gelagert. Mittels der Linearführung kann das Futter inklusive des Glasrohrrohlings geradlinig relativ zu dem Gehäuse und der Ablängeinrichtung bewegt werden. Beispielsweise kann die Linearführung als Schienenführung ausgebildet sein, die einen bewegbaren Führungswagen, der an dem Futter angebracht ist, und wenigstens eine ortsfeste, insbesondere gehäusefeste, Schiene aufweisen kann, bezüglich der der Führungswagen geradlinig verlagerbar ist.

In einer weiteren beispielhaften Ausführung der erfindungsgemäßen Anlage ist die Vorschubeinrichtung dazu eingerichtet, die Glasröhre und gegebenenfalls das Futter schrittweise translatorisch insbesondere in Richtung der Ablängeinrichtung zu verlagern und/oder von der Ablängeinrichtung weg. Beispielsweise kann die Vorschubeinrichtung einen Schrittmotor aufweisen oder an einen Schrittmotor gekoppelt sein. Es ist jedoch auch möglich, eine kontinuierliche translatorische Verlagerung des Futters auszubilden. Beispielsweise kann die schrittweise translatorische Verlagerung des Futters auf eine Prozesstaktzeit und/oder einen Prozessablauf abgestimmt sein. Beispielsweise wird der die Vorschubeinrichtung dann zum translatorischen Verlagern des Futters aktiv, wenn ein Abtrennvorgang vollständig erfolgt ist. Während des Abtrennvorgangs kann sichergestellt werden, dass die Vorschubeinrichtung deaktiviert ist, so dass das Futter sich nicht bewegt und ortsfest steht.

Gemäß einer beispielhaften Weiterbildung der erfindungsgemäßen Anlage weist die Vorschubeinrichtung insbesondere vorbestimmte und/oder voreingestellte Bewegungsinkremente auf. Die Bewegungsinkremente, die translatorische, insbesondere horizontale, Verlagerungsbewegungen des Futters inklusive des Glasrohrrohlings definieren, können auf eine vorbestimmte Axiallänge der Glasbehältnisse abgestimmt sein. Auf diese Weise kann sichergestellt sein, dass der Glasrohrrohling exakt um diejenige Länge in Glasrohrrohlinglängsrichtung weitergefördert wird, die einer Axiallänge des herzustellenden Glasbehältnisses entspricht, so dass der Glasrohrrohling erneut in Position ist für einen nachgelagerten Abtrennvorgang.

Gemäß einem weiteren Aspekt der vorliegenden Erfindung, der mit den vorhergehenden Aspekten und beispielhaften Ausführungen kombinierbar ist, ist eine Anlage zum Herstellen eines insbesondere rotationssymmetrischen Glasbehältnisses, wie einer Glasspritze, einer Glaskarpule, eines Glasvials oder einer Glasampulle, aus einem insbesondere rotationssymmetrischen Glasrohrrohling, der eine Rotationsachse definiert, bereitgestellt.

Die Anlage umfasst eine Ablängeinrichtung zum Ablängen von Glasbehältnissen vorbestimmter Länge von dem Glasrohrrohling. Mittels der Anlage können automatisch Glasbehältnisse von dem Glasrohrrohling abgelängt werden entsprechend einer vordefinierten, gewünschten Länge in Glasrohrrohlinglängsrichtung betrachtet. Unter bestimmte Länge kann auch verstanden werden, dass vor jedem individuellen Abtrennvorgang jedes individuellen Glasbehältnisses eine Individuallänge eingestellt wird, beispielsweise manuell eingegeben wird oder aus einem zentral hinterlegten Steuerungsprogramm abgefragt wird. Die Ablängeinrichtung kann mehrere Teilschritte durchführen bzw. mehrere Teilstationen aufweisen. Beispielsweise erfolgt der Ablängvorgang im Wesentlichen kontaktlos, beispielsweise durch Wärmeeintrag und die dadurch hervorgerufene Materialspannung innerhalb des Glasrohrrohlings, welche zu einem Abtrennen, insbesondere einer Absprengung, des Glasbehältnisses von dem Glasrohrrohling führt. Beispielsweise kann das Ablängen die folgenden Schritte umfassen bzw. die Ablängeinrichtung die folgenden Stationen umfassen: Anritzen des Glasrohrrohlings; lokales Erwärmen des Glasrohrrohlings insbesondere im Bereich der Anritzstelle, beispielsweise durch einen Brenner oder einen CO₂-Laser; anschließendes lokales Abkühlen, insbesondere durch Aufbringen eines Kühlfluidstroms, insbesondere eines Kühl-Luftstroms oder eines Kühlflüssigkeitsstroms, des angeritzten und lokal erhitzten Bereichs des Glasrohrrohlings; und erneutes lokales Erwärmen des mit dem Kühlfluidstrom beaufschlagten Glasrohrrohrlingbereichs zur Initiierung der Abtrennung des Glasbehältnisses, beispielsweise durch eine sogenannte Thermoshock-Absprengung; gegebenenfalls Verschmelzen der Abtrennstelle, um den Glasrohrrohling endseitig zu verschließen.

Gemäß dem weiteren Aspekten der vorliegenden Erfindung umfasst die Anlage ein der Ablängeinrichtung vorgeschaltetes Futter, insbesondere Spannfutter, zum rotierenden Lagern des Glasrohrrohlings, das den Glasrohrohling derart rotierende lagert, dass die Rotationsachse des Glasrohrohlings im Wesentlichen horizontal orientiert ist. Der Ausdruck vorgeschaltet ist in Bezug auf die Glasrohrrohling die Rotationsachsenrichtung bzw. dessen Glasrohrrohlinglängsachse zu verstehen. Für den Fall, dass es sich um einen rotationssymmetrischen Glasrohrrohling handelt, entspricht die Rotationsachse der Mittelachse des Glasrohrrohlings. Das Futter, auch Spannfutter genannt, ist dazu eingerichtet, den Glasrohrrohling wenigstens umfangsabschnittsweise zu umgreifen und festzuhalten. Beispielsweise kann das Spannfutter mit einer Antriebseinrichtung, wie einem Motor, gekoppelt sein, der die Rotation des Futters und damit des Glasrohrrohlings veranlasst. Beispielsweise kann es sich bei dem Futter um ein Drei-Backen-Spannfutter handeln. Das Spannfutter kann auch dazu dienen, den Glasrohrrohling entlang dessen Längsachse in seiner Position zu fixieren, so dass Bearbeitungsvorgänge, insbesondere Formgebungen, wie eine Deformation oder ein Abtrennvorgang, vorgenommen werden können. Die Erfinder der vorliegenden Erfindung haben herausgefunden, dass durch eine horizontale Orientierung des Glasrohrohlings während dessen Bearbeitung auf konstruktiv einfache Weise Beschädigungen an den Glasrohrohlingen und insbesondere an den Glasbehältnissen vermieden werden können. Zum Weitergeben bzw. Weiterfördern des Glasrohrohlings und auch der abgetrennten Glasbehältnisse werden diese nun nicht mehr unter Ausnutzung der Schwerkraft fallengelassen und durch Anschlagbleche aufgefangen, auf denen diese mit ihren Trenn-/Stirnflächen auftreffen, wodurch Beschädigungen einhergehen können, sondern in horizontaler Richtung kontrolliert weitergegeben und entnommen. Aufgrund der horizontalen Orientierung ist ferner ein Einlegen der Glasrohrohlinge quer zu deren Rotations- und/oder Glasrohrrohlinglängsachsenrichtung vereinfacht. Dadurch ist die Anlage deutlich flexibler in der Handhabung.

Gemäß einer beispielhaften Ausführung der erfindungsgemäßen Anlage besitzt das Futter eine Spannlänge von weniger als 80 mm, insbesondere von weniger als 60 mm, weniger als 40 mm oder weniger als 20 mm, beispielsweise von etwa 10 mm. Als Spannlänge kann diejenige Axiallänge verstanden werden, um die der Glasrohrohling innerhalb des Futters umgriffen und gehalten ist. Um die Glasrohrohlinge in vertikaler Orientierung bzw. Ausrichtung so spannen und rotieren zu können, dass diese genügend stabil rotieren und gelagert sind, um nicht zu schlagen und möglichst ohne Ausschläge zu rotieren, waren erhebliche axiale Spannlängen innerhalb des Futters notwendig. Die vorliegende Erfindung ermöglicht es nun, deutlich Bauraum in Axialrichtung einzusparen und die Futter deutlich kleiner dimensionieren zu können, insbesondere kostengünstige zu gestalten.

Gemäß einem weiteren Aspekt der vorliegenden Erfindung, der mit den vorhergehenden Aspekten und beispielhaften Ausführungen kombinierbar ist, ist ein Luftlager für eine insbesondere nach einem der vorstehenden Aspekte bzw. beispielhaften Ausführungen ausgebildete Anlage zum Herstellen eines rotationssymmetrischen Glasbehältnisses, wie einer Glasspritze, einer Glaskarpule, eines Glasvials oder einer Glasampulle, aus einem rotationssymmetrischen Glasrohrrohling, der eine Rotationsachse definiert, bereitgestellt. Die Ausdrücke vorgeschaltet und nachgeschaltet sind in Bezug auf eine Glasrohrrohlinglängsachse zu verstehen.

Mittels des Luftlagers kann der Glasrohrrohling in Umfangsrichtung wenigstens teilweise kontaktlos umgriffen werden, um eine kontaktlose Halte- und/oder Lagerkraft dem Glasrohrrohling mitzuteilen. Glasseitig gewährleistet das Luftlager die kontinuierliche Rotation des Glasrohrrohlings um dessen Rotationsachse. Im Allgemeinen wird bei dem Luftlager ein insbesondere dünner Luftfilm zwischen Glasrohrrohling und Luftlager ausgebildet, der den Glasrohrrohling und das Luftlager voneinander trennt, insbesondere die kontaktlose Lagerung bewirkt.

Das erfindungsgemäße Luftlager umfasst eine Druckluftquelle. Die Druckluftquelle kann dazu ausgebildet sein, Druckluft von bis zu 5 bar zu erzeugen. Beispielsweise generiert die Druckluftquelle Druckluft im Bereich von 1 bar bis 4 bar. Beispielsweise ist die Druckluftquelle ansteuerbar, um die Höhe der Druckluft einstellen zu können. Dabei kann die Druckluft auf eine Gewichtskraft des zu lagernden Glasrohrrohlings abgestimmt sein. In der Regel ist die Druckluft so zu wählen, dass sich Ansaug- und Abstoßkraft bezüglich des Glasrohrrohlings aufheben, so dass der Glasrohrrohling zuverlässig gelagert werden kann.

Das erfindungsgemäße Luftlager umfasst ferner eine sich entlang der Rotationsachse des Glasrohrrohlings, insbesondere entlang der Glasrohrrohlinglängsachse, erstreckende Aufnahme für den Glasrohrrohling. Die Aufnahme kann diejenige Komponente des Luftlagers sein, welche dem Glasrohrrohling unmittelbar zugewandt ist, diesen wenigstens umfangsabschnittsweise umgibt und somit lagert. Die Aufnahme kann wenigstens abschnittsweise an einen Außenumfang des rotationssymmetrischen Glasrohrrohlings derart formangepasst sein, dass beim Beaufschlagen der Aufnahme mittels Druckluft von der Druckluftquelle der Glasrohrrohling kontaktlos gelagert ist.

Dadurch ist eine besonders reibungsfreie Lagerung des Glasrohrrohlings möglich. Des Weiteren kennzeichnet sich das Luftlager des Glasrohrrohlings durch einen Selbstreinigungseffekt, da mittels des bereitgestellten Luftstroms Schmutz- und/oder Glaspartikel entfernt werden können. Ferner bietet das erfindungsgemäße Luftlager sowohl einen Rotations- als auch einen Translationsfreiheitsgrad für den Glasrohrrohling, so dass diese zum einen kontaktlos rotierend gelagert werden kann und zum anderen es möglich ist, den Glasrohrrohling unter Aufrechterhaltung der Lagerungskräfte kontaktlos translatorisch relativ zu dem Luftlager zu verlagern, insbesondere zu der Aufnahme zu verlagern. Insbesondere ist die Druckluftquelle dazu eingerichtet, einen den Glasrohrrohling umströmenden und an der Aufnahme entlangströmenden Luftfilm zu generieren, welcher zum einen die Kontaktfreiheit zwischen Luftlager, insbesondere Aufnahme, und Glasrohrrohling einstellt. Im Allgemeinen macht sich das Luftlager den Bernoulli-Effekt zunutze und ermöglicht einen Bewegungsfreiheitsgrad des Glasrohrrohlings sowohl drehend in Rotationsrichtung als auch translatorisch verschiebbar entlang dessen Glasrohrlängsrichtung. Das Luftlager kann dazu ausgebildet sein, sämtliche relevanten Kräfte, insbesondere die Gewichtskraft des Glasrohrrohlings sowie Prozesskräfte beispielsweise aufgrund der Rotation des Glasrohrrohlings aufzunehmen, ohne den Glasrohrrohling zu kontaktieren.

Gemäß einer beispielhaften Weiterbildung des erfindungsgemäßen Luftlagers ist der Glasrohrrohling derart kontaktlos in der Aufnahme gelagert, dass ein Abstand, insbesondere Vertikalabstand, zwischen Aufnahme, insbesondere einem zentralen Aufnahmegrund, zwischen Aufnahme und Glasrohrrohling im Bereich von 0,05 mm bis 0,5 mm, insbesondere im Bereich von 0,01 mm bis 0,3 mm, insbesondere bei etwa 0,2 mm liegt.

Gemäß einer weiteren beispielhaften Ausführung des erfindungsgemäßen Luftlagers ist die Aufnahme im Wesentlichen teilzylindrisch geformt. Insbesondere ist derjenige Bereich der Aufnahme teilzylindrisch und/oder teilweise offen geformt, welcher den rotationssymmetrischen Glasrohrrohling wenigstens umfangsabschnittsweise umgibt. Beispielsweise ist die Aufnahme abschnittsweise konkav und/oder abschnittsweise konvex geformt. Die Aufnahme kann ferner mehrteilig ausgebildet sein bzw. aus mehreren Teilen hergestellt sein. Beispielsweise bildet ein konkaver Abschnitt der Aufnahme einen Aufnahmegrund und/oder ein konvexer Abschnitt wenigstens abschnittsweise eine Aufnahmeseitenflanke. Beispielsweise sind zwei gegenüberliegende Aufnahmeseitenflanken und ein dazwischenliegender Aufnahmegrund vorgesehen. Die Aufnahmeseitenflanken können dabei aus einem Stück hergestellt sein. Der Aufnahmegrund kann aus einem anderen Stück, separat zu den Aufnahmeseitenflanken, hergestellt sein.

Gemäß einer weiteren beispielhaften Ausführung der vorliegenden Erfindung, weist die Aufnahme einen insbesondere konkaven Aufnahmegrund und zwei gegenüberliegende insbesondere konvexe, das heißt abschnittsweise konvexe, Aufnahmeseitenflanken auf, die jeweils in einem im Wesentlichen in Rotationachsenrichtung bzw. Glasrohrrohlinglängsachsenrichtung konstanten Abstand unter Ausbildung eines Spaltraums zu dem Aufnahmegrund angeordnet sind. Beispielsweise liegt der Abstand im Bereich von 0,05 mm bis 0,15 mm, beispielsweise bei etwa 0,09 mm. Der Spaltraum kann eine fluidale Verbindung zwischen der Druckluftquelle und der Aufnahme, insbesondere dem Aufnahmeraum, in dem der Glasrohrrohling wenigstens teilweise aufgenommen ist, bilden. Beispielsweise ist die Anlage so ausgebildet, dass die von der Druckluftquelle bereitgestellte Druckluft über den Spaltraum in die Aufnahme gelangt, wobei der Spaltraum für die Erzeugung des Bernoulli-Effekts verantwortlich ist, um die Haltekräfte in der Aufnahme für den Glasrohrrohling bereitzustellen.

Gemäß einem weiteren Aspekt der vorliegenden Erfindung, der mit den vorhergehenden Aspekten und beispielhaften Ausführungen kombinierbar ist, ist ein Verfahren zum Herstellen eines insbesondere rotationssymmetrischen Glasbehältnisses, wie einer Glasspritze, einer Glaskarpule, eines Glasvials oder einer Glasampulle bereitgestellt.

Gemäß dem erfindungsgemäßen Verfahren wird ein Glasrohrrohling bereitgestellt, der eine Rotationsachse definiert. Die Glasbehältnisherstellungsanlage kann beispielsweise fortwährend mit Glasrohrrohlingen bestückt werden, die beispielsweise in einem Vorratslager bevorratet sind, das beispielsweise in unmittelbarer Nähe zu der Glasbehältnisherstellungsanlage sich befinden kann. Des Weiteren kann die Glasbehältnisherstellungsanlage so eingerichtet sein, dass sie unmittelbar von einer Glasblasstation bestückt wird, insbesondere mit einem Endlos-Glasrohrrohling.

Des Weiteren wird der Glasrohrrohling kontinuierlich um seine Rotationsachse rotiert und abschnittsweise kontaktlos, insbesondere mittels eines nach einem der vorstehenden Aspekte bzw. beispielhaften Ausführungen ausgebildeten Luftlagers, rotierend gelagert.

Des Weiteren kann das erfindungsgemäße Verfahren den Ablängschritt umfassen, bei dem der Glasrohrrohling auf eine vorbestimmte Länge, insbesondere Axiallänge zum Abtrennen des Glasbehältnisses abgelenkt wird.

Gemäß einem weiteren Aspekt der vorliegenden Erfindung, der mit den vorhergehenden Aspekten und beispielhaften Ausführungen kombinierbar ist, ist ein Verfahren zum Herstellen eines insbesondere rotationssymmetrischen Glasbehältnisses, wie einer Glasspritze, einer Glaskarpule, eines Glasvials oder einer Glasampulle, geschaffen.

Bei dem erfindungsgemäßen Verfahren wird ein Glasrohrrohling, der eine Rotationsachse definiert, bereitgestellt.

Ferner wird der Glasrohrrohling kontinuierlich um seine Rotationsachse, die im Wesentlichen einer Glasrohrrohlinglängsachse entspricht, rotiert und insbesondere schrittweise in Rotationsachsenrichtung verlagert. Die Verlagerung kann beispielsweise translatorisch und/oder im Wesentlichen ausschließlich horizontal erfolgen.

Gemäß dem erfindungsgemäßen Verfahren ist die Rotationsachse des Glasrohrrohlings im Wesentlichen horizontal orientiert.

Gemäß einer beispielhaften Ausführung des erfindungsgemäßen Verfahrens ist das Verfahren dazu eingerichtet, die erfindungsgemäße Anlage gemäß einem der zuvor beschriebenen Aspekte bzw. beispielhaften Ausführungen zu realisieren.

Bevorzugte Ausführungen sind in den Unteransprüchen angegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine schematische Darstellung eines Stand der Technik-Röhrenschneiders einer Glasbearbeitungsanlage;
- Fig. 2: eine schematische Darstellung eines Ausschnitts einer erfindungsgemäßen Anlage zum Herstellen eines Glasbehältnisses;
- Fig. 3: eine schematische Ansicht von oben der Anlage gemäß Fig. 2, wobei eine Ablängeinrichtung der Anlage ebenfalls abgebildet ist;
- Fig. 4: eine schematische Frontalansicht der Anlage gemäß Fig. 3;
- Fig. 5: eine perspektivische Ansicht einer beispielhaften Ausführung eines erfindungsgemäßen Luftlagers;
- Fig. 6: eine Schnittansicht des Luftlagers gemäß Fig. 5; und
- Fig. 7: eine Detailansicht VII gemäß Fig. 6

Unter Bezugnahme auf Fig. 1 wird ein Stand der Technik-gemäßer Röhrenschneider Röhrenschneider, der im Allgemeinen mit der Bezugsziffer 200 versehen ist, einer Stand der Technik-gemäßen Glasbearbeitungsanlage erläutert. Der Röhrenschneider 200 dient grundsätzlich dazu, Glasbehältnisse von einem Glasrohrrohling 201 abzutrennen. Die einzelnen Bearbeitungsvorgänge bzw. Stationen sind durch fortlaufende Großbuchstaben A - K gekennzeichnet. Bei A wird ein rotationssymmetrischer Glasrohrrohling 201 bereitgestellt und von einem Futter 203 rotierend gelagert. Eine Glasrohrrohlinglängsrichtung, die zugleich der Rotationsachse des Glasrohrrohlings 201 entspricht, ist durch das Bezugszeichen R gekennzeichnet. Wie in Fig. 1 zu sehen ist, steht bei A der Glasrohrrohling 201 axial aus dem Futter 203 nach unten hervor. Glasrohrrohling 201 und Spannfutter 203 sind dabei in Vertikalrichtung V orientiert. Die Stationen B-D betreffen eine Positionierungsstation 205, die dazu dient, den Glasrohrrohling 201 bezüglich der Vertikalrichtung V auszurichten. Dies erfolgt mittels den jeweiligen Stationen B-D zugeordneten Anschlagblechen 207, 209 und 211, die sich im Wesentlichen in Horizontalrichtung H erstrecken und gegen die der Glasrohrrohling 201 fallengelassen wird bei geöffnetem Futter 203. Die Anschlagbleche 207, 209, 211 sind in einem vorbestimmten Vertikalabstand bezüglich des Futters 203 angeordnet, so dass stets der gleiche Vertikalabstand zwischen Spannfutter 203 und Anschlagblechen 207, 209, 211 erreicht wird, so dass mittels des nachgeschalteten Abtrennvorgangs stets im Wesentlichen die gleiche Axiallänge von Glasbehältnissen 213 (Station J) abgetrennt werden kann.

Nach erfolgter Positionierung des Glasrohrrohlings 201 bezüglich der Vertikalrichtung V wird der Glasrohrrohling 201 erneut durch das Futter 203 ergriffen und fixiert, um die Vertikalposition des Glasrohrrohlings 201 zu fixieren. Die Schritte E bis J fassen im Wesentlichen den Abtrennvorgang 206 zusammen: Bei E erfolgt ein Vorbereiten des Abtrennvorgangs, beispielsweise mittels Anritzen durch ein Ritzmesser 215; bei den Stationen F und G erfolgt ein starkes Erhitzen, insbesondere in einem lokalen Bereich an dem Glasrohrrohling 201, beispielsweise mittels eines Kammbrenners 217; bei H erfolgt ein Kühlvorgang, beispielsweise mittels eines Kühlluftstroms oder eines Kühlfluidstroms 219; bei I ist mittels des Pfeils mit dem Bezugszeichen 221 eine erneute lokale Erhitzung angedeutet, die eine Thermoshock-Absprengung zufolge hat; unter J ist zu erkennen, dass das abgelängte bzw. abgetrennte Glasbehältnis 213 von dem restlichen Glasrohrrohling 201 getrennt ist und in Vertikalrichtung V nach unten fällt; bei K kann ein optionaler Verschmelzvorgang, angedeutet durch die Pfeile mit dem Bezugszeichen 223 erfolgen, um beispielsweise den in dem Futter 203 verbliebenen Glasrohrrohling 201 stirnseitig zu verschließen, beispielsweise um einen Boden eines Glasbehältnisses 213 zu bilden.

Anschließend kann der Prozess von vorne A beginnen und der verbliebene, weiterhin in dem Futter 203 eingespannte Glasrohrrohling 201 erneut in Bezug auf die Vertikalrichtung V zunächst positioniert werden B-D.

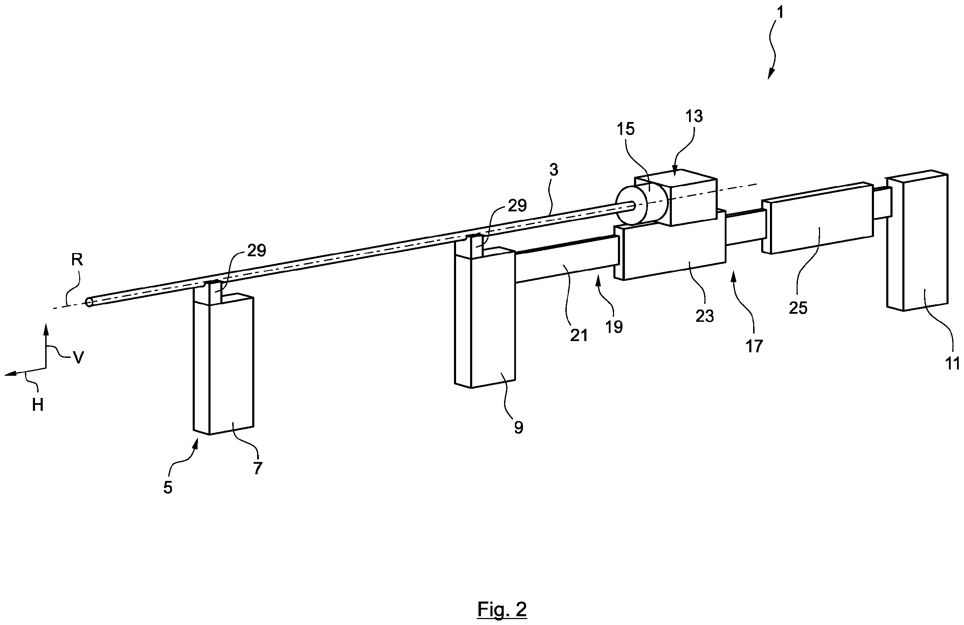

In Fig. 2 ist ein Ausschnitt einer erfindungsgemäßen Anlage1 zum Herstellen eines insbesondere rotationssymmetrischen Glasbehältnisses vorbestimmter Axiallänge in perspektivischer Ansicht und vereinfacht dargestellt. Ein Aspekt der vorliegenden Erfindung besteht darin, dass die Anlage 1 bzw. insbesondere dessen einzelnen Komponenten derart gestaltet sind, dass eine Rotationsachse R des zu bearbeitenden rotationssymmetrischen Glasrohrrohlings 3 im Wesentlichen in Horizontalrichtung H orientiert ist. Dadurch ergibt sich im Vergleich zum Stand der Technik eine deutlich flexiblere Handhabung der Anlage 1 sowie ein vereinfachtes Bedienen und insbesondere Bestücken der Anlage 1 mit Glasrohrrohlingen 3. Insbesondere kann das Bestücken nämlich quer zur Rotationsachsenrichtung R, die im Wesentlichen einer Glasrohrrohlinglängsrichtung entspricht, erfolgen. Grundsätzlich umfasst die Anlage 1 gemäß Fig. 2 ein Gestell 5, welches gemäß der beispielhaften Ausführung in Fig. 2 im Wesentlichen drei identisch ausgebildete Stützsäulen 7, 9, 11 besitzt. Das Gestell 5 trägt die weiteren Komponenten der Anlage 1. Dazu gehört unter anderem ein Futter 13 zum rotierenden Lagern des Glasrohrrohlings 3. Bei dem Futter 13 kann es sich beispielsweise um ein 3-Backen-Spannfutter handeln. Beispielsweise besitzt das Futter 13 eine Spanneinrichtung 15, wie Spannbacken, zum wenigstens teilweise umfänglichen Umgreifen des Glasrohrrohlings 3 und zum Fixieren des Glasrohrrohlings 3 innerhalb des Futters 13. Das Futter 13 kann eine Antriebseinrichtung (nicht dargestellt) besitzen, mittels der der Glasrohrrohling 3 insbesondere kontinuierlich rotiert werden kann um seine Rotationsachse R.

Gemäß einem weiteren Aspekt der vorliegenden Erfindung weist das Futter 13 eine Vorschubeinrichtung, die im Allgemeinen mit der Bezugsziffer 17 versehen ist, auf, welche dazu eingerichtet ist, das Futter 13 inklusive des darin eingespannten und fixierten sowie rotierend gelagerten Glasrohrrohlings 3 translatorisch verlagern zu können. Wie in Fig. 2 zu sehen ist, erfolgt die translatorische Verlagerung entlang der Glasrohrrohlinglängsrichtung, das heißt in Horizontalrichtung H. Die Vorschubeinrichtung 17 kann beispielsweise einen Schrittmotor zum schrittweisen translatorischen Verlagern des Futters 13 besitzen. Beispielsweise können die schrittweisen Bewegungsinkremente auf eine vorbestimmte Axiallänge der herzustellenden Glasbehältnisse abgestimmt sein.

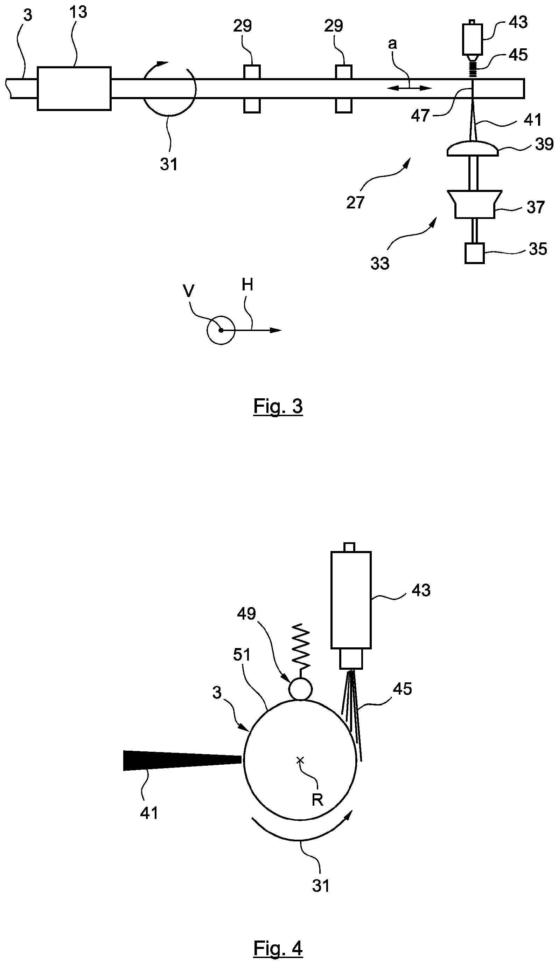

Gemäß Fig. 2 ist eine Linearführung, insbesondere eine Schienenführung 19, vorgesehen, um das Spannfutter 13 translatorisch zu verlagern. Die Linearführung 19 umfasst eine in Horizontalrichtung H sich zwischen zwei der Stützsäulen 9, 11 erstreckende schienenartige Gleiteinrichtung 21, entlang der ein an das Futter 13 angebrachter Führungswagen 23 sich relativ verlagern kann. Wie beispielsweise in Fig. 2 zu sehen ist, kann der Führungswagen 23 bezüglich der Schiene 19 formabgestimmt sein und/oder formschlüssig mit dieser verbunden sein. Beispielsweise kann der Führungswagen 23 die Vorschubeinrichtung 17 bilden bzw. eine Antriebseinrichtung, wie den Schrittmotor, zum translatorischen Verlagern des Spannfutters 13 besitzen. Des Weiteren kann ein weiterer, mit der Schiene 21 im Gleiteingriff stehender und mit dem Führungswagen 23 in Kontakt bringbarer Antriebswagen 25 vorgesehen sein, der dazu eingerichtet ist, den antriebseinheitslosen Führungswagen 23, der fest mit dem Spannfutter 13 verbunden ist, zu verlagern. Während der Bearbeitung des Glasrohrrohlings 3 und der Herstellung mehrerer Glasbehältnisse wird der Glasrohrrohling 3 mittels des Spannfutters 13 durch eine von der Vorschubeinrichtung 17 translatorische Bewegungskraft translatorisch verlagert, um den Glasrohrrohling 3 sukzessive weiter in Richtung der in Fig. 2 nicht dargestellten Ablängeinrichtung 27 (siehe Fig. 3) zu verfahren, so dass aus einem Glasrohrrohling 3 mehrere Glasbehältnisse hergestellt werden können. Der Vorteil der Anlage 1 der vorliegenden Erfindung besteht auch darin, dass aufgrund der translatorischen Bewegbarkeit des Spannfutters 13 nach einem erfolgten Abtrennvorgang das Spannfutter 13 nicht geöffnet werden muss, um den Glasrohrrohling 3 umzupositionieren. Dies erfolgt nämlich weiter bei eingespanntem Glasrohrrohling 3 in dem Futter 13 mittels der Vorschubeinrichtung 17.

Zur weiteren Lagerung des langgezogenen Glasrohrrohlings 3 sind zwischen dem Futter 13 und der in Fig. 2 nicht ersichtlichen Ablängeinrichtung 27, welche in Abbildung 2 ganz links anzuordnen ist, zwei in einem horizontalen Abstand zueinander vorgesehene Luftlager 29 bereitgestellt. Die Luftlager 29 können beispielsweise gemäß einem der erfindungsgemäßen Aspekte bzw. beispielhaften Ausführungen ausgestaltet sein. Die Luftlager 29 sind auf jeweils einem der Stützen 7, 9 gehalten und derart angeordnet, dass die Luftlager 29 in Vertikalrichtung V nach oben hin offen sind, um den Glasrohrrohling 3 aufzunehmen. Die Luftlager 29 dienen dazu, den Glasrohrrohling 3 kontaktlos zu lagern und in Bezug auf die Rotationsrichtung R in Position zu halten, damit der Abtrennvorgang mittels der Ablängeinrichtung 27 zuverlässig erfolgen kann. Beispielsweise ist das ablängeinrichtungseitige Luftlager (in Fig. 2 links) in unmittelbarer Nähe zur Ablängeinrichtung 27 positioniert. Mittels des Luftlagers 29 kann der Glasrohrrohling zum einen rotierend gelagert werden und zum anderen stellt das Luftlager 29 auch einen translatorischen Bewegungsfreiheitsgrad bereit, so dass die translatorische Verlagerungsbewegung, welche durch die Vorschubeinrichtung 17 initiiert wird, problemlos erfolgen kann, insbesondere ohne dass irgendwelche Lagerungen aufgehoben werden müssen.

In der schematischen Ansicht gemäß Fig. 3, die als Draufsicht auf die Anlage 1 gemäß Fig. 2 aufgefasst werden kann, ist zusätzlich eine beispielhafte Ausführung einer Ablängeinrichtung 27 gezeigt. Der durch das Spannfutter 13 rotierend gelagerte Glasrohrrohling 3 wird konstant um dessen Rotationsachse R rotiert, was durch den gekrümmten Pfeil mit dem Bezugszeichen 31 angedeutet ist. Die beiden Luftlager 29 sind schematisch dargestellt und lagern den Glasrohrrohling 3. Die Ablängeinrichtung 27 kann beispielsweise einen CO₂-Laser, der im Gesamten durch das Bezugszeichen 33 angedeutet ist, und eine Energiequelle 35, eine Lasereinrichtung 37 sowie eine Spiegeleinrichtung 39 zum Fokussieren eines Laserstrahls 41 auf den Glasrohrrohling 3 aufweisen, sowie eine Kühleinrichtung 43, mittels der ein Kühlfluidstrahl 45 auf den Glasrohrrohling 3 aufbringbar ist. Wie in Fig. 3 zu sehen ist, erfolgt sowohl die Erhitzung über den CO₂-Laser 33 als auch die Abkühlung mittels der Kühleinrichtung 43 lokal, insbesondere an derselben lokalen Stelle. Diese lokale Stelle, welche mit dem Bezugszeichen 47 versehen ist, stellt diejenige Axialstelle an dem Glasrohrrohling 3 dar, an welcher der Glasrohrrohling 3 zur Bildung eines Glasbehältnisses abgelenkt wird. Diese axiale Position ist festgelegt. Dies wird dadurch realisiert, dass die Ablängeinrichtung 33 ortsfest positioniert ist und der Glasrohrrohling 3 in der Horizontalrichtung H translatorisch verlagerbar ist, was mittels des Bezugszeichens a angedeutet ist. Alternativ könnte beispielsweise auch ein Brenner vorgesehen sein, um den Glasrohrrohling 3 lokal zu erhitzen.

Fig. 4 stellt eine Frontalansicht gemäß Fig. 3 dar (von rechts in Abbildung 3 betrachtet), wobei zusätzlich ein federvorgespanntes Ritzrad 49 zum Vorbehandeln, insbesondere Anritzen, der Abtrennstelle 47 abgebildet ist. Wie in Fig. 4 zu sehen ist, ist der Kühlfluidstrahl 45 exzentrisch bezüglich der Rotationsachse R des Glasrohrrohlings 3 orientiert und im Wesentlichen tangential an einen Außenumfang 51 des Glasrohrohlings 3 gerichtet. Es wurde herausgefunden, dass die Exzentrität bzw. der Versatz sich vorteilhaft auf die Effektivität der Kühlung des erwärmten Glasrohrrohlings 3 auswirkt.

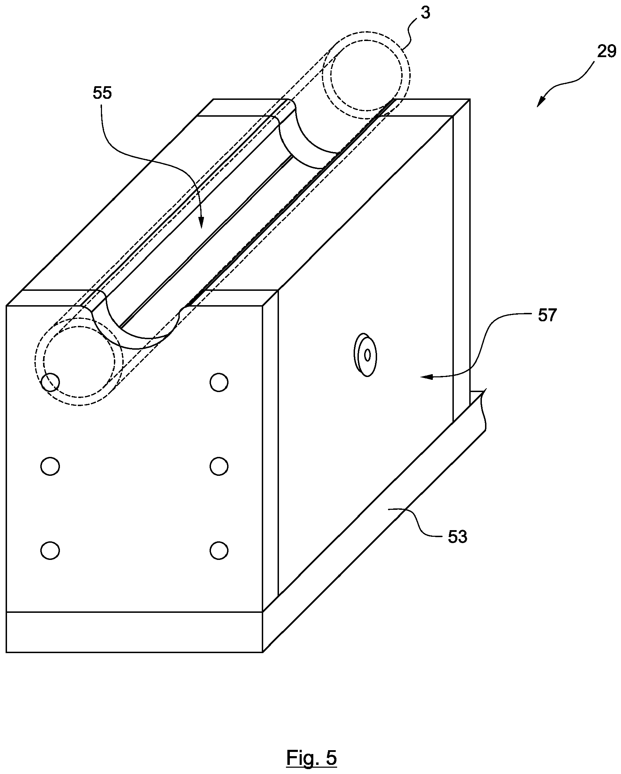

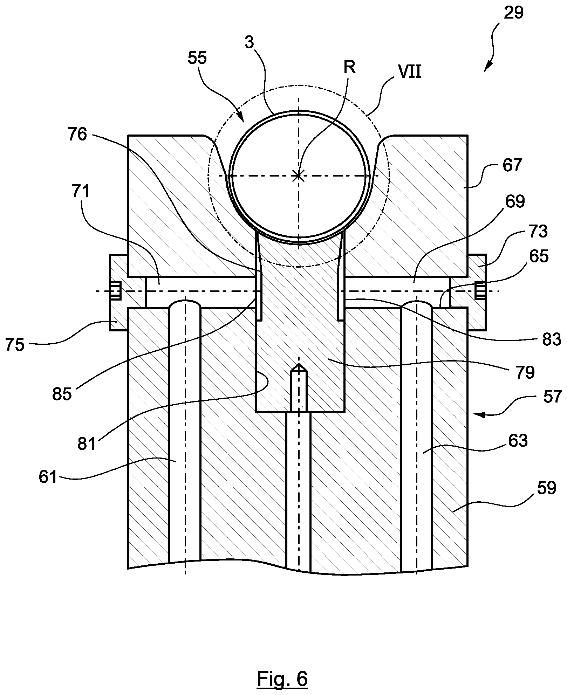

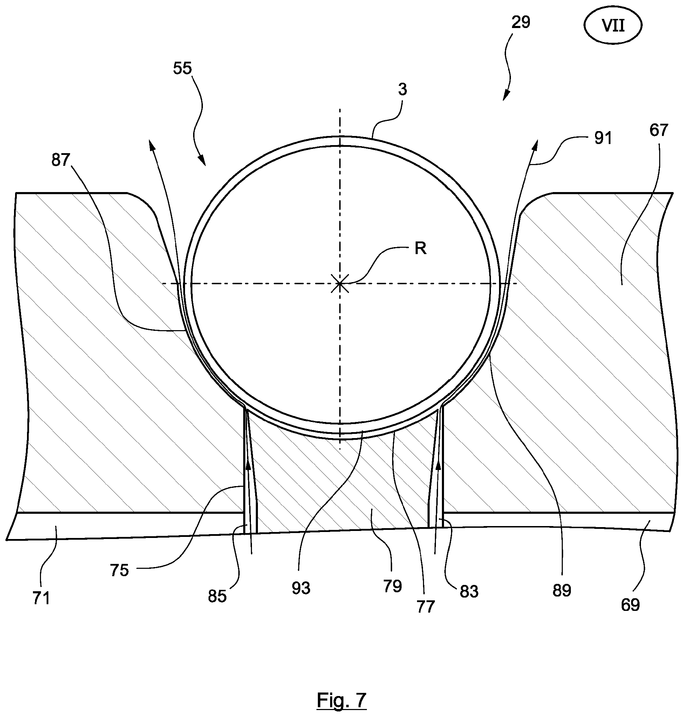

Anhand der Fig. 5 bis 7 wird eine beispielhafte Ausführung eines erfindungsgemäßen Luftlagers 29 erläutert. Im Allgemeinen ist das Luftlager 29 so ausgestaltet, dass es unter Ausnutzung des Bernoulli-Effektes eine kontaktlose Lagerung des Glasrohrrohlings 3 ermöglicht, wobei sowohl ein Rotations- als auch ein Translationsfreiheitsgrad geschaffen ist, wodurch sich die besonders flexible erfindungsgemäße Anlage zum Herstellen von Glasbehältnissen ergibt. Der grundsätzliche Aufbau des Luftlagers 29 ist in Fig. 5 zu sehen, die Funktionsweise des Luftlagers 29 wird vor allem anhand der Fig. 6 und 7 geschildert. Das Luftlager 29 kann eine im Wesentlichen ebene Auflage 53 umfassen sowie ein eine Aufnahme 55 für den Glasrohrrohling 3 bildendes Gehäuse 57, welches mit der Auflage 53 verbunden ist. Das Gehäuse 57 ist gemäß der beispielhaften Ausführung in Fig. 5 als im Wesentlichen quaderförmiger Block geformt, dessen Erstreckung in Rotationsachsenrichtung R des Glasrohrrohlings größer bemessen ist als quer zur Rotationsachsenrichtung R. Der durch das Luftlager 29 gelagerte und in die Aufnahme 55 eingelegte Glasrohrrohling 3 ist in Fig. 5 strichliert dargestellt zur besseren Veranschaulichung des Luftlagers 29.

Bezugnehmend auf die Fig. 6 und 7 wird die beispielhafte Ausführung des Luftlagers 29 in der Schnittansicht beschrieben sowie schematisch dessen Funktionsweise. Insbesondere aus Fig. 6 geht hervor, dass das Luftlager 29 mehrteilig ausgebildet ist, insbesondere dass das Gehäuse 57 mehrteilig ausgebildet ist. Das Luftlager 29 umfasst eine Basis oder ein Basisteil 59, in die Druckluftkanäle 61, 63, die in Fig. 6 im Wesentlichen in Vertikalrichtung V orientiert sind, zur Verbindung mit einer nichtdargestellten Druckluftquelle oder einem Drucklufterzeuger. Die Druckluftkanäle 61, 63 münden bis zu einer eine Oberseite der Basis 59 bildenden Stirnfläche 65. Oberhalb der Basis 59 befindet sich ein die Aufnahme 55 teilweise begrenzendes Deckelteil 67. Das Deckelteil 67 ist unter Ausbildung zweier horizontal orientierter Druckluftkanäle 71, 69, in die jeweils die vertikalen Druckluftkanäle 61, 63 münden, auf das Basisteil 59 aufgesetzt. Auch seitlich sind die horizontalen Druckluftkanäle 69, 71 mittels Verschlüssen 73, 75 insbesondere fluiddicht abgeschlossen. Das Gehäuseteil 67 besitzt eine an ihrer Anlageoberseite ausgebildete Vertiefung, welche die Aufnahme 55 teilweise formt. In der Aufnahme 55 ist der hohlzylindrische, rotationssymmetrische Glasrohrrohling 3 aufgenommen und gelagert. Die Aufnahme 55 ist in ihrem Querschnitt abschnittsweise an einem Außenumfang des Glasrohrrohlings formangepasst. Das Gehäuse 67 begrenzt die Aufnahme 55 im Wesentlichen zu beiden lateralen Seiten und besitzt eine im Wesentlichen zentrale Vertiefung 75, die in die Aufnahme 55 mündet, und in welche ein einen Aufnahmegrund 77 bildender Einsatz 79 eingesetzt ist. Der Einsatz 79 ist ferner auch in einer zentralen Vertiefung 81 innerhalb des Basisteils 59 aufgenommen.

Entscheidend für die Funktionsweise des Luftlagers 29 ist das Ausbilden einer fluidalen Verbindung zwischen der nichtdargestellten Druckluftquelle und der Aufnahme 55 über die Druckluftkanäle 61, 63, 71, 69. Zu beiden Seiten hin, also den jeweiligen Druckluftkanälen 69, 71 zugeordnet, ist der Einsatz 79 unter Ausbildung eines im Wesentlichen in Vertikalrichtung orientierten Spaltraums 83, 85 ausgespart. Über den Spaltraum 83, 85 kann Druckluft über die Druckluftkanäle bis hin zur Aufnahme 55 gelangen. Dies bedeutet, dass das Gehäusedeckelteil 67 in einem Abstand zu dem Einsatz 79 angeordnet ist. Der Spaltraum 83, 85 verjüngt sich zunehmend hin zur Aufnahme 55, um einen Art Düseneffekt zu bewirken, der letztlich für den Bernoulli-Effekt verantwortlich ist, um die Lagerungs- und/oder Haltekraft für den Glasrohrrohling 3 zu erzeugen.

Bezugnehmend auf Fig. 7 ist die Aufnahme 55 im Detail abgebildet. Es ist zu erkennen, dass das Gehäuseteil 67 zwei seitliche Aufnahmeflanken 87, 89 zur Begrenzung der Aufnahme 55 bildet, die im Wesentlichen zumindest abschnittsweise konkav gekrümmt sind. Zusammen mit einem ebenfalls konkav gekrümmten Aufnahmegrund 77, der durch den Einsatz 79 gebildet ist, ist eine im Wesentlichen an einen Außenumfang des Glasrohrrohlings 3 angepasste Aufnahme 55 gebildet, wobei gewährleistet ist, dass ein kontinuierlicher Abstand zwischen Glasrohrrohling 3 und Aufnahmewänden 77, 87, 89 besteht. Ein Druckluftstrom, der den Luftfilm zwischen Glasrohrrohling 3 und Aufnahmewandung zur kontaktfreien Lagerung des Glasrohrrohlings 3 erzeugt, ist mittels des Pfeils mit dem Bezugszeichen 91 angedeutet. Ein zwischen Aufnahmegrund 77 und Glasrohrrohling 3 eingestellter Abstand, insbesondere Vertikalabstand, der einen Spaltraum 93 festlegt, ist im Bereich von 0,05 mm bis 0,5 mm, insbesondere bei etwa 0,2 mm. In Rotationsachsenrichtung R betrachtet besteht ein im Wesentlichen gleichmäßiger Abstand oder Spalt zwischen dem Glasrohrrohling 3 und dem Aufnahmeseitenflanken 87, 89 von etwa 0,05 mm bis 0,15 mm, beispielsweise von 0,09 mm. Die Spalträume haben sich bei der erfindungsgemäßen Anlage zum Herstellen von Glasbehältnissen als vorteilhaft erwiesen. Beispielsweise liegt die von der Druckluftquelle bereitgestellte Druckluft in einem Bereich von 1 bar bis 4 bar vor.

### BEZUGSZEICHENLISTE

- 1: Anlage
- 3: Glasrohrrohling
- 5: Gestell
- 7, 9, 11: Stützsäule
- 13: Futter
- 15: Spanneinrichtung
- 17: Vorschubeinrichtung
- 19: Linearführung
- 21: Schiene
- 23: Führungswagen
- 25: Antriebswagen
- 27: Ablängeinrichtung
- 29: Luftlager
- 31: Rotationsbewegung
- 33: CO₂-Laser
- 35: Energiequelle
- 37: Laserquelle
- 39: Spiegeleinrichtung
- 41: Laserstrahl
- 43: Kühleinrichtung
- 45: Kühlfluidströmung
- 47: lokale Ablängstelle
- 49: Ritzrad
- 51: Außenumfang
- 53: Auflage
- 55: Aufnahme
- 57: Gehäuse
- 59: Basisteil
- 61, 63, 71, 69: Druckluftkanal
- 65: Oberseitenstirnfläche
- 67: Deckelgehäuseteil
- 73, 75: Verschluss
- 77: Aufnahmegrund
- 79: Einsatz
- 81: Vertiefung
- 76: Vertiefung
- 83, 85, 93: Spaltraum
- 87,89: Aufnahmeseitenflanke
- 91: Druckluftströmung
- 93: Spaltraum
- 200: Stand der Technik-Röhrenschneider
- 201: Glasrohrrohling
- 203: Spannfutter
- 205: Positionierstation
- 206: Abtrennvorgang
- 207, 209, 211: Anschlagblech
- 213: Glasbehältnis
- 215: Anritzeinrichtung
- 217: Erhitzeinrichtung
- 219: Kühleinrichtung
- 221: Erwärmeeinrichtung
- 223: Verschmelzeinrichtung

- A-K: Stand der Technik-Röhrenschneider-Stationen
- B-D: Positionierungsstation
- E-J: Abtrennvorgang
- V: Vertikalrichtung
- H: Horizontalrichtung
- R: Rotationsrichtung
- a: Translationsbewegung

## Patentansprüche

1. Anlage (1) zum Herstellen eines insbesondere rotationssymmetrischen Glasbehältnisses, wie einer Glasspritze, einer Glaskarpule, eines Glasvials oder einer Glasampulle, aus einem insbesondere rotationssymmetrischen Glasrohrrohling (3), der eine Rotationsachse definiert, umfassend:
- ein Futter (13) zum rotierenden Lagern des Glasrohrrohlings, wobei das Futter (13) dazu eingerichtet ist, den Glasrohrrohling wenigstens umfangsabschnittsweise zu umgreifen und festzuhalten;
- eine Ablängeinrichtung (27) zum Ablängen von Glasbehältnissen vorbestimmter Länge von dem Glasrohrrohling; und
- ein dem Futter (13) nachgeschaltetes und der Ablängeinrichtung (27) vorgeschaltetes Luftlager (29) zum kontaktlosen Lagern des Glasrohrrohlings.

2. Anlage (1) nach Anspruch 1, wobei das Luftlager (29) eine sich entlang der Rotationsachse des Glasrohrrohlings (3) erstreckende Aufnahme (55) für den Glasrohrrohling (3) aufweist, die wenigstens abschnittsweise an einen Außenumfang des insbesondere rotationssymmetrischen Glasrohrrohlings (3) formangepasst ist und/oder im Querschnitt teilweise offen ist, sodass der Glasrohrrohling (3) in einer Richtung quer zur Rotationsachse in die Aufnahme (55) eingelegt werden kann.

3. Anlage (1) nach Anspruch 2, wobei die Aufnahme (55) im Wesentlichen teilzylindrisch geformt ist, wobei insbesondere die Aufnahme (55) abschnittsweise konkav und/oder abschnittsweise konvex geformt ist, wobei insbesondere ein konkaver Abschnitt der Aufnahme (55) einen Aufnahmegrund und/oder ein konvexer Abschnitt eine Aufnahmeseitenflanke bilden/bildet.

4. Anlage (1) nach einem der vorstehenden Ansprüche, wobei das Luftlager (29) an einer axialen Position im Bereich von 1/3 bis 2/3 eines Axialabstands zwischen der Ablängeinrichtung (27) und dem Futter (13) angeordnet ist oder wobei wenigstens ein weiteres Luftlager (29) zum kontaktlosen Lagern des Glasrohrrohlings (3) vorgesehen ist, wobei sich ein futterseitiges Luftlager (29) an einer axialen Position im Bereich von 1/4 bis 1/2 eines Axialabstands zwischen der Ablängeinrichtung (27) und dem Futter (13) und sich ein ablängeinrichtungsseitiges Luftlager (29) an einer axialen Position von mindestens 3/4 eines Axialabstands zwischen der Ablängeinrichtung (27) und dem Futter (13) angeordnet ist.

5. Anlage (1) nach einem der vorstehenden Ansprüche, ferner umfassend:
- ein der Ablängeinrichtung (27) vorgeschaltetes Futter (13) zum rotierenden Lagern des Glasrohrrohlings, wobei das Futter (13) eine Vorschubeinrichtung (17) zum insbesondere horizontalen Verlagern des Glasrohrrohlings (3) aufweist.

6. Anlage (1) nach Anspruch 5, wobei die Vorschubeinrichtung (17) derart eingerichtet ist, dass sie den Glasrohrrohling (3) inklusive des Futters insbesondere horizontal verlagern kann.

7. Anlage (1) nach einem der Ansprüche 5 oder 6, wobei das Futter (13) relativ zu einem ortsfesten Gehäuse der Anlage (1) insbesondere translatorisch verlagerbar ist.

8. Anlage (1) nach einem der Ansprüche 5 bis 7, wobei das Futter (13) mittels einer Linearführung, beispielsweise einer Schienenführung, insbesondere translatorisch verlagerbar an einem ortsfesten Gehäuse der Anlage (1) gelagert ist.

9. Anlage (1) nach einem der Ansprüche 5 bis 8, wobei die Vorschubeinrichtung (17) dazu eingerichtet ist, die Glasröhre und gegebenenfalls das Futter (13) schrittweise translatorisch in Richtung der Ablängeinrichtung (27) zu verlagern.

10. Anlage (1) nach Anspruch 9, wobei die Vorschubeinrichtung (17) Bewegungsinkremente aufweist, die auf eine vorbestimmte Axiallänge der Glasbehältnisse abgestimmt ist.

11. Anlage nach einem der vorstehenden Ansprüche, ferner umfassend:
- ein der Ablängeinrichtung (27) vorgeschaltetes Futter, das den Glasrohrrohling (3) derart rotierend lagert, dass die Rotationsachse des Glasrohrrohlings (3) im Wesentlichen horizontal orientiert ist.

12. Anlage (1) nach einem der vorstehenden Ansprüche, wobei das Futter (13) eine Spannlänge von weniger als 80 mm, insbesondere weniger als 60 mm, 40 mm oder weniger als 20 mm, beispielsweise von etwa 10 mm, besitzt.

13. Anlage (1) nach einem der vorstehenden Ansprüche, wobei das Luftlager (29) umfasst:
- eine Druckluftquelle; und
- eine sich entlang der Rotationsachse des Glasrohrrohlings (3) erstreckende Aufnahme (55) für den Glasrohrrohling, die wenigstens abschnittsweise an einen Außenumfang des rotationssymmetrischen Glasrohrrohlings (3) derart formangepasst ist, dass beim Beaufschlagen der Aufnahme (55) mittels Druckluft von der Druckluftquelle der Glasrohrrohling (3) kontaktlos gelagert ist.

14. Anlage (1) nach Anspruch 13, wobei der Glasrohrrohling (3) derart kontaktlos in der Aufnahme (55) gelagert ist, dass ein Abstand, insbesondere Vertikalabstand, zwischen Aufnahme (55) und Glasrohrrohling (3) im Bereich von 0,05 mm bis 0,5 mm, insbesondere im Bereich von 0,01 mm bis 0,3 mm, insbesondere bei etwa 0,2 mm, liegt.

15. Anlage (1) nach Anspruch 13 oder 14, wobei die Aufnahme (55) im Querschnitt teilweise offen ist, sodass der Glasrohrrohling (3) in einer Richtung quer zur Rotationsachse in die Aufnahme (55) eingelegt werden kann.

16. Anlage (1) nach einem der Ansprüche 13 bis 15, wobei die Aufnahme (55) im Wesentlichen teilzylindrisch geformt ist, wobei insbesondere die Aufnahme (55) abschnittsweise konkav und/oder abschnittsweise konvex geformt ist, wobei insbesondere ein konkaver Abschnitt der Aufnahme (55) einen Aufnahmegrund und/oder ein konvexer Abschnitt eine Aufnahmeseitenflanke bilden/bildet.

17. Anlage (1) nach einem der Ansprüche 13 bis 16, wobei die Aufnahme (55) einen insbesondere konkaven Aufnahmegrund und zwei gegenüberliegende insbesondere konvexe Aufnahmeseitenflanken aufweist, die jeweils in einem im Wesentlichen in Rotationsachsenrichtung konstanten Abstand, beispielsweise im Bereich von 0,05 mm bis 0,15 mm, unter Ausbildung eines Spaltraums zu dem Aufnahmegrund angeordnet sind, wobei insbesondere der Spaltraum eine fluidale Verbindung zwischen Druckluftquelle und Aufnahme (55) bildet.

18. Verfahren zum Herstellen eines insbesondere rotationssymmetrischen Glasbehältnisses, wie einer Glasspritze, einer Glaskarpule, eines Glasvials oder einer Glasampulle, bei dem:
- ein Glasrohrrohling (3) bereitgestellt wird, der eine Rotationsachse definiert;
- der Glasrohrrohling (3) von einem Futter (13) rotierend gelagert, umfangsabschnittsweise umgriffen und festgehalten wird;
- der Glasrohrrohling (3) kontinuierlich um seine Rotationsachse rotiert wird und abschnittsweise kontaktlos rotierend gelagert wird;
- wobei insbesondere der Glasrohrrohling (3) auf eine vorbestimmte Länge abgelängt wird.

19. Verfahren nach Anspruch 18, das dazu eingerichtet ist, die Anlage (1) gemäß einem der Ansprüche 1 bis 17 zu realisieren.

## Claims

1. System (1) for producing a particularly rotationally symmetrical glass container, such as a glass syringe, a glass carpule, a glass vial or a glass ampoule, from a particularly rotationally symmetrical glass tube blank (3), which defines a rotational axis, comprising:
- a chuck (13) for mounting the glass tube blank in a rotating manner, wherein the chuck (13) is arranged to grip and hold the glass tube blank at least in sections circumferentially;
- a length-cutting device (27) for cutting to length glass containers of predetermined length from the glass tube blank; and
- an air bearing (29), arranged downstream of the chuck (13) and upstream of the length-cutting device (27) for contactlessly mounting the glass tube blank.

2. System (1) according to claim 1, wherein the air bearing (29) has a receptacle (55) for the glass tube blank (3), which extends along the rotational axis of the glass tube blank (3) and is adapted at least in sections to the shape of an outer circumference of the particularly rotationally symmetrical glass tube blank (3) and/or is partially open in cross-section, such that the glass tube blank (3) can be inserted into the receptacle (55) in a direction transverse to the rotational axis.

3. System (1) according to claim 2, wherein the receptacle (55) is essentially partially cylindrical, wherein particularly the receptacle (55) is shaped concavely in sections and/or convexly in sections, wherein particularly a concave section of the receptacle (55) forms a receptacle base and/or a convex section forms a receptacle side flank.

4. System (1) according to one of the preceding claims, wherein the air bearing (29) is arranged at an axial position in the range of 1/3 to 2/3 of an axial distance between the length-cutting device (27) and the chuck (13), or wherein at least one further air bearing (29) for contactlessly mounting the glass tube blank (3) is provided, wherein an air bearing (29) on the chuck side is arranged at an axial position in the range of 1/4 to 1/2 of an axial distance between the length-cutting device (27) and the chuck (13) and an air bearing (29) on the side of the length-cutting device is arranged at an axial position of at least 3/4 of an axial distance between the length-cutting device (27) and the chuck (13).

5. System (1) according to one of the preceding claims, further comprising:
- a chuck (13), arranged upstream of the length-cutting device (27), for mounting the glass tube blank in a rotating manner, wherein the chuck (13) has a feeding device (17) for particularly horizontally displacing the glass tube blank (3).

6. System (1) according to claim 5, wherein the feeding device (17) is configured in such a way that it can displace, particularly horizontally, the glass tube blank (3) along with the chuck.

7. System (1) according to one of claims 5 or 6, wherein the chuck (13) can be displaced, particularly translationally, relative to a stationary housing of the system (1).

8. System (1) according to one of claims 5 to 7, wherein the chuck (13) is mounted, particularly in a translationally displaceable manner, on a stationary housing of the system (1) by means of a linear guide, for example a rail guide.

9. System (1) according to one of claims 5 to 8, wherein the feeding device (17) is configured to displace the glass tube and optionally the chuck (13) in a stepwise translational manner in the direction of the length-cutting device (27).

10. System (1) according to claim 9, wherein the feeding device (17) has movement increments, which are matched to a predetermined axial length of the glass containers.

11. System according to one of the preceding claims, further comprising:
- a chuck that is arranged upstream of the length-cutting device (27) and that mounts the glass tube blank (3) in a rotating manner in such a way that the rotational axis of the glass tube blank (3) is oriented essentially horizontally.

12. System (1) according to one of the preceding claims, wherein the chuck (13) has a span length of less than 80 mm, particularly less than 60 mm, 40 mm or less than 20 mm, for example of approximately 10 mm.

13. System (1) according to one of the preceding claims, wherein the air bearing (29) comprises:
- a compressed-air source; and
- a receptacle (55) for the glass tube blank, which extends along the rotational axis of the glass tube blank (3) and is adapted at least in sections to the shape of an outer circumference of the rotationally symmetrical glass tube blank (3) in such a way that the glass tube blank (3) is mounted contactlessly when the receptacle (55) is supplied with compressed air by the compressed-air source.

14. System (1) according to claim 13, wherein the glass tube blank (3) is contactlessly mounted in the receptacle (55) in such a way that a distance, particularly a vertical distance, between the receptacle (55) and the glass tube blank (3) is in the range of 0.05 mm to 0.5 mm, particularly in the range of 0.01 mm to 0.3 mm, particularly approximately 0.2 mm.

15. System (1) according to claim 13 or 14, wherein the receptacle (55) is partially open in cross-section, such that the glass tube blank (3) can be inserted into the receptacle (55) in a direction transverse to the rotational axis.

16. System (1) according to one of claims 13 to 15, wherein the receptacle (55) is essentially partially cylindrical, wherein particularly the receptacle (55) is shaped concavely in sections and/or convexly in sections, wherein particularly a concave section of the receptacle (55) forms a receptacle base and/or a convex section forms a receptacle side flank.

17. System (1) according to one of claims 13 to 16, wherein the receptacle (55) has a particularly concave receptacle base and two opposite, particularly convex, receptacle side flanks, each of which is arranged at a distance essentially constant in the rotational axis direction, for example in the range of 0.05 mm to 0.15 mm, forming a gap space to the receptacle base, wherein particularly the gap space forms a fluid connection between compressed-air source and receptacle (55).

18. Method for producing a particularly rotationally symmetrical glass container, such as a glass syringe, a glass carpule, a glass vial or a glass ampoule, with which:
- a glass tube blank (3), which defines a rotational axis, is provided;
- a glass tube blank (3) is mounted in a rotating manner, gripped and held in place in sections circumferentially by a chuck (13);
- the glass tube blank (3) is continuously rotated about its rotational axis and is contactlessly mounted in a rotating manner in sections;
- wherein particularly the glass tube blank (3) is cut to a predetermined length.

19. Method according to claim 18, which is configured to realize the system (1) according to one of claims 1 to 17.

## Revendications

1. Installation (1), destinée à fabriquer un contenant en verre notamment symétrique en rotation, tel qu'une seringue en verre, une carpoule en verre, un flacon en verre ou une ampoule en verre à partir d'une ébauche tubulaire (3) en verre, notamment symétrique en rotation qui définit un axe de rotation, comprenant :
- un mandrin (13) destiné à loger en rotation l'ébauche en verre, le mandrin (13) étant configuré pour entourer et maintenir l'ébauche tubulaire en verre au moins sur des parties circonférentielles ;
- un dispositif de coupe (27) en longueur, destiné à couper des contenants en verre d'une longueur prédéfinie à partir de l'ébauche tubulaire en verre ; et
- un palier à air (29), monté en aval du mandrin (13) et monté en amont du dispositif de coupe (27) en longueur, destiné à loger sans contact l'ébauche tubulaire en verre.

2. Installation (1) selon la revendication 1, le palier à air (29) comportant un réceptacle (55) pour l'ébauche tubulaire (3) en verre qui s'étend le long de l'axe de rotation de l'ébauche tubulaire (3) en verre, dont la forme est adaptée au moins par endroits à une circonférence extérieure de l'ébauche tubulaire (3) en verre notamment symétrique en rotation et / ou dont la section transversale est partiellement ouverte, de telle sorte que l'ébauche tubulaire (3) en verre puisse être insérée dans une direction transversale à l'axe de rotation dans le réceptacle (55).

3. Installation (1) selon la revendication 2, le réceptacle (55) étant sensiblement façonné de forme partiellement cylindrique, notamment le réceptacle (55) étant façonné par endroits de forme concave et / ou par endroits de forme convexe, notamment une partie concave du réceptacle (55) formant un fond inférieur de réception et / ou une partie convexe formant un flanc latéral de réception.

4. Installation (1) selon l'une quelconque des revendications précédentes, le palier à air (29) étant placé sur une position axiale de l'ordre de 1/3 à 2/3 d'un écart axial entre le dispositif de coupe (27) en longueur et le mandrin (13) ou au moins un palier à air (29) supplémentaire étant prévu pour le logement sans contact de l'ébauche tubulaire (3) en verre, un palier à air (29) côté mandrin étant placé sur une position axiale de l'ordre de 1/4 à 1/2 d'un écart axial entre le dispositif de coupe (27) en longueur et le mandrin (13) et un palier à air (29) côté dispositif de coupe en longueur étant placé sur une position axiale d'au moins 3/4 d'un écart axial entre le dispositif de coupe (27) en longueur et le mandrin (13).

5. Installation (1) selon l'une quelconque des revendications précédentes, comprenant par ailleurs :
- un mandrin (13) placé en amont du dispositif de coupe (27) en longueur, pour le logement en rotation de l'ébauche tubulaire en verre, le mandrin (13) comportant un dispositif d'avance (17) pour le déplacement notamment horizontal de l'ébauche tubulaire (3) en verre.

6. Installation (1) selon la revendication 5, le dispositif d'avance (17) étant configuré de sorte à pouvoir déplacer, notamment à l'horizontale l'ébauche tubulaire (3) en verre ainsi que le mandrin.

7. Installation (1) selon l'une quelconque des revendications 5 ou 6, le mandrin (13) étant déplaçable, notamment en translation par rapport à un carter stationnaire de l'installation (1).

8. Installation (1) selon l'une quelconque des revendications 5 à 7, le mandrin (13) étant déplaçable, notamment en translation sur un carter stationnaire de l'installation (1) au moyen d'un guidage linéaire, par exemple une glissière.

9. Installation (1) selon l'une quelconque des revendications 5 à 8, le dispositif d'avance (17) étant configuré pour déplacer en translation pas à pas en direction du dispositif de coupe (27) en longueur le tube en verre et le cas échéant le mandrin (13).

10. Installation (1) selon la revendication 9, le dispositif d'avance (17) comportant des incréments de mouvement qui sont adaptés à une longueur axiale prédéfinie des contenants en verre.

11. Installation selon l'une quelconque des revendications précédentes, comprenant par ailleurs :
- un mandrin, monté en amont du dispositif de coupe (27) en longueur, qui loge en rotation l'ébauche tubulaire (3) en verre de telle sorte que l'axe de rotation de l'ébauche tubulaire (3) en verre soit orienté sensiblement à l'horizontale.

12. Installation (1) selon l'une quelconque des revendications précédentes, le mandrin (13) détenant une longueur de serrage de moins de 80 mm, notamment de moins de 60 mm, 40 mm ou de moins de 20 mm, par exemple d'environ 10 mm.

13. Installation (1) selon l'une quelconque des revendications précédentes, le palier à air (29) comprenant :
- une source d'air comprimé ; et
- un réceptacle (55) pour l'ébauche tubulaire en verre qui s'étend le long de l'axe de rotation de l'ébauche tubulaire (3) en verre, dont la forme est adaptée au moins par endroits à une circonférence extérieure de l'ébauche tubulaire en verre (3) symétrique en rotation, de telle sorte que lorsque le réceptacle (55) est soumis à de l'air comprimé par la source d'air comprimé, l'ébauche tubulaire (3) en verre soit logée sans contact.

14. Installation (1) selon la revendication 13, l'ébauche tubulaire (3) en verre étant logée sans contact dans le réceptacle (55), de telle sorte qu'un écart, notamment un écart vertical entre le réceptacle (55) et l'ébauche tubulaire (3) en verre se situe dans l'ordre de 0,05 mm à 0,5 mm, notamment dans l'ordre de 0,01 mm à 0,3 mm, notamment à environ 0,2 mm.

15. Installation (1) selon la revendication 13 ou 14, le réceptacle (55) étant partiellement ouvert dans sa section transversale, de sorte que l'ébauche tubulaire (3) en verre puisse être insérée dans le réceptacle (55) dans une direction à la transversale de l'axe de rotation.

16. Installation (1) selon l'une quelconque des revendications 13 à 15, le réceptacle (55) étant sensiblement façonné de forme partiellement cylindrique, notamment le réceptacle (55) étant façonné par endroits de forme concave et / ou par endroits de forme convexe, notamment une partie concave du réceptacle (55) formant un fond inférieur de réception et / ou une partie convexe formant un flanc latéral de réception.

17. Installation (1) selon l'une quelconque des revendications 13 à 16, le réceptacle (55) comportant un fond inférieur de réception notamment concave et deux flancs latéraux de réception opposés notamment concaves, qui sont placés respectivement avec un écart sensiblement constant dans la direction de l'axe de rotation par exemple de l'ordre de 0,05 mm à 0,15 mm, en formant un espace en fente par rapport au fond inférieur de réception, notamment l'espace en fente formant une liaison fluidique entre la source d'air comprimé et le réceptacle (55).

18. Procédé, destiné à fabriquer un contenant en verre notamment symétrique en rotation, tel qu'une seringue en verre, une carpoule en verre, un flacon en verre ou une ampoule en verre, lors duquel
- une ébauche tubulaire (3) en verre qui définit un axe de rotation est mise à disposition ;
- l'ébauche tubulaire (3) en verre est logée en rotation par un mandrin (13), entourée par endroits sur sa circonférence et maintenue ;
- l'ébauche tubulaire (3) en verre est mise en rotation continue autour de son axe de rotation et logée en rotation sans contact par endroits ;
- notamment l'ébauche tubulaire (3) en verre étant coupée en longueur à une longueur prédéfinie.

19. Procédé selon la revendication 18, qui est configuré pour réaliser l'installation (1) selon l'une quelconque des revendications 1 à 17.
